# EUROPEAN PATENT SPECIFICATION

(11) **EP 0 910 821 B1**
(45) Date of publication and mention of the grant of the patent: **06.03.2002**
(21) Application number: 97934918.0
(22) Date of filing: 11.07.1997
(51) Int. Cl.: G06F 1/00

(54) **COPY PROTECTION FOR DATABASE UPDATES TRANSMITTED VIA THE INTERNET**
KOPIERSCHUTZ FÜR, AUF DEN NEUESTEN STAND GEBRACHTE DATENBANKEN DIE ÜBER DAS INTERNET ÜBERTRAGEN SIND
PROTECTION DES COPIES D'ACTUALISATION DE BASES DE DONNEES TRANSMISES PAR INTERNET

(30) Priority: 12.07.1996 US 21702 P
(43) Date of publication of application: 28.04.1999
(73) Proprietor: AlliedSignal Inc., Morristown, New Jersey 07962-2245 (US)
(72) Inventor: DILLARD, Kelly, E., Olathe, KS 66061 (US); GODDARD, David, L., Kansas City, KS 66106 (US); SMITH, David, L., Olathe, KS 66062 (US)
(74) Representative: Freeman, Jacqueline Carol
(86) International application number: US9712021
(87) International publication number: WO9802793

(56) References cited:
- WO-A-90/13865
- US-A- 4 999 806
- US-A- 5 103 476
- RYOICHI MORI ET AL: "THE CONCEPT OF SOFTWARE SERVICE SYSTEMS (SSS)" SYSTEMS & COMPUTERS IN JAPAN, vol. 19, no. 5, 1 May 1988, pages 38-49, XP000110608
- NATHANS S: "THE CD/ONLINE ENABLERS VENDORS AND SERVICES TAKING THE HYBRID LEAD" CD ROM PROFESSIONAL, vol. 9, no. 3, 1 March 1996, pages 46-50, 52 - 54, 56, XP000577567

## Description

### BACKGROUND OF THE INVENTION

### 1. Field of the Invention

The present invention relates to a system for protecting the unauthorized use of software transmitted over a communication link and more particularly to a system in which the software is encrypted with a unique software key that only allows the software to be uploaded into a unit, such as a global positioning system (GPS) unit, with a matching software key.

### 2. Description of the Prior Art

Global positioning systems are known to be used in aircraft and other vehicles for navigation. Such GPS systems not only provide the position of the aircraft or vehicle but may also be integrated with topographical and/or navigational data, such as terrain and airport topographical data as well as highway maps stored in a database, to provide an indication of the vehicle or aircraft relative to the topographical data or highway information. For example, as disclosed in EP 0 842,396, assigned to the same assignee of the present invention, the topographical data, such as the elevation of the highest obstacles within a predetermined region, are stored in a memory device aboard the aircraft. The GPS allows the topographical data to be displayed as a function of the position of the aircraft.

Often , the topographical and navigational data needs to be updated due to changing topography and highway information. Because of the relative ease in which software that is transmitted over the Internet can be duplicated, updates of the topographical data are known to be provided in a diskette or cartridge form and mailed to the customers. Typically, users of such integrated GPS systems must first determine if an update is available by checking with the database vendor. Orders are typically placed by telephone. The update diskette or cartridge is then mailed to the customer. As such, from the time the order is placed, considerable time passes before the updated topographical data is actually received by the customer so it can be uploaded into the customer's integrated GPS unit. The delay is even more acute for international customers for which the mailing time is considerably greater.

There are other problems associated with providing updated topographical and navigational data on diskettes or cartridges to a customer. For example, for customers that have multiple integrated GPS units, the customer may choose to upload the updated data onto such multiple units even though the customer has only paid for the update for a single unit. The customer may also transfer the update diskette or cartridge to another unauthorized user.

US 5 103 476 describes an arrangement for transactions in which licensee data is used in encrypting programs as part of cyclic redundancy checking. However this system relies on various information from the customer being provided in advance during a registration process.

### SUMMARY OF THE INVENTION

It is an object of the present invention to solve various problems in the prior art.

It is yet another object of the present invention to provide a system for preventing unauthorized use of a database or other software transmitted over a communication link, such as the Internet.

Accordingly one aspect of the present invention relates to a method for allowing secure transmission of software code transmitted over a communication link from a transmitting electronic unit (36) to one or more receiving electronic units (38), the method comprising: applying a unique software key to each of the one or more receiving electronic units; encrypting (62) software code as a function of a single one of the unique software keys applied to the receiving electronic units; transmitting (64) the encrypted software code from said transmitting electronic unit over said communication link to said one or more receiving electronic units (38), and decrypting said transmitted, encrypted software code at that one of the receiving electronic units (38) with the applied unique software key that matches said single one of the software keys used to encrypt the software code.

Another aspect relates to a system for preventing unauthorized use of software transmitted over a communication link, the system comprising:one or more receiving electronic units (38) to each :of which is applied a unique software key; means for encrypting (62)software as a function of a single one of the unique software keys applied to the receiving electronic units (38); means for transmitting said encrypted software over a communication link to said one or more receiving electronic units (38); and means for decrypting said transmitted encrypted software at the electronic unit with the applied unique software key that matches the single one of the unique software keys which is used by the encrypting means (62).

### DESCRIPTION OF THE DRAWINGS

These and other objects of the present invention will be readily understood with reference to the following specification and attached drawings wherein:
FIG. 1 is a graphical illustration of an exemplary Internet page layout in accordance with the present invention;
FIG. 2 is a simplified representation of a dialog box which may form a part of one of the Web pages for user information, such as the unique software key, in accordance with the present invention;
FIG. 3 is a simplified view of a personal computer interfacing with an Internet server in order to provide user information;
FIG. 4 is similar to FIG. 2 illustrating the process of downloading the software from the Internet to a user's personal computer;
FIG. 5 is a simplified graphical representation illustrating the uploading of the software from the Internet being transferred between a personal computer and a product, such as an integrated global positioning system (GPS) unit;
FIG. 6 is a block diagram illustrating the data flow and the organization of the software on the Internet server in accordance with the present invention;
FIG. 7 is a simplified flowchart illustrating a portion of the system in accordance with the present invention for ordering software over the Internet;
FIG. 8 is a graphical representation of a dialog box for user payment information which may form a portion of one of the Web pages illustrated in FIG. 1 in accordance with the present invention;
FIG. 9 is a graphical illustration of a dialog box for enabling users to provide information regarding the requested software as well as a unique software key which may form a portion of one of the Web pages illustrated in FIG. 1 in accordance with the present invention;
FIG. 10 is a graphical illustration of a dialog box for the user's desired payment method which may form a portion of one of the Web pages illustrated in FIG. 1 in accordance with the present invention;
FIG. 11 is a graphical illustration of a confirmation page which may form a portion of one of the Web pages illustrated in FIG. 1 which enables the user to download software over the Internet in accordance with the present invention;
FIG. 12 is a flowchart of the system in accordance with the present invention which provides copy protection for software transferred over the Internet in accordance with the present invention;
FIG. 13 is a flowchart of the software at the server for encrypting the software to be transferred over the Internet in accordance with the present invention; and
FIG. 14 is a flowchart of the decryption process for uploading software transferred over the Internet to a customer's unit, such as an integrated global positioning system (GPS) unit.

### DETAILED DESCRIPTION

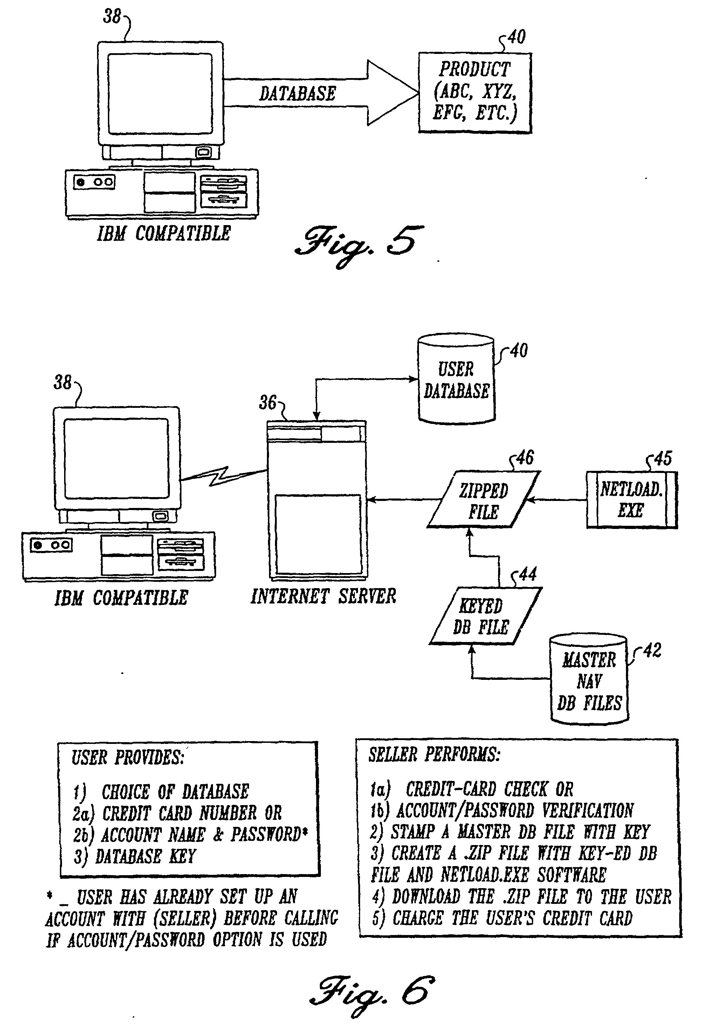

The present invention relates to a system for preventing unauthorized use of a database or other software transmitted over a communication link, such as the Internet, for use in particular electronic equipment, such as a global position system (GPS) unit. As mentioned above, such systems utilize topographical data for various regions of the world in order to display the topographical data as a function of the position of the aircraft. Heretofore such GPS units have been sold with topographical and/or navigational data stored in a database on cartridges or diskettes. Updated databases are known to be shipped through the mail. Such a process takes a relatively long period of time. The system in accordance with the present invention allows the database update to be transmitted over communication links, such as the Internet quickly and easily while virtually eliminating unauthorized use of the database information. More particularly, each GPS unit is provided with a unique software key. The unique key is an 8 digit hexadecimal number, which may be embedded in a read only memory (ROM) within the GPS unit or stored within a removable cartridge at the factory prior to a GPS unit being shipped to the customer. The user uses the unique software key to order update software, such as an update database for the GPS unit, over the communication link and upload the database into a GPS unit with a matching software key, for example as illustrated in FIGS. 3, 4 and 5. For example, the user simply connects to the GPS database or other software vendor's home page on the Worldwide Web. After providing the unique software key number as well as the desired payment method, the database or other software is encrypted as a function of the unique software key at the Internet server, for example. The encrypted software is transmitted to the user over the Internet along with a decryption program which only allows the software to be uploaded into a GPS unit having a matching key. Since the updated database is encrypted as a function of the unique software key, any attempts to upload the software into a unit not matching the unique software key will be futile. Although multiple copies of the encrypted database can be made, the system in accordance with the present invention prevents these encrypted copies from being uploaded into multiple GPS units.

The present invention is suitable for updating the topographical information stored in databases for use with various integrated GPS systems, such as, KLX 100 GPS/COMM, KLN 98/KLN 89B GPS, KLN 90B GPS and KLN 900 GPS, available from AlliedSignal, Incorporated. Although the system in accordance with the present invention is described and illustrated in terms of transferring updated database information for an integrated GPS over the Internet, the principles of the present invention are clearly applicable to protecting virtually any type of software transmitted over virtually any communication link; wired or wireless.

It is also to be understood that the principles of the present invention are also applicable to other forms of electronic transfer that do not involve the Internet and may be implemented for transferring software over virtually any communication link, such as a modem and even a wireless link. Moreover, as will be discussed in more detail below, a personal computer is used to access the Internet server, for example, which contains the software to be transferred as illustrated in FIGS. 3 and 4. The desired software is then encrypted and transferred along with a decryption program back to the personal computer, which, in turn, is used to transfer and decrypt the software into a separate electronic unit, such as an integrated GPS unit. However, it should also be understood that the principles of the present invention are also applicable to systems in which the desired software is also transmitted from a remote communication node, such as an Internet server, directly to the unit, such as the integrated GPS unit itself.

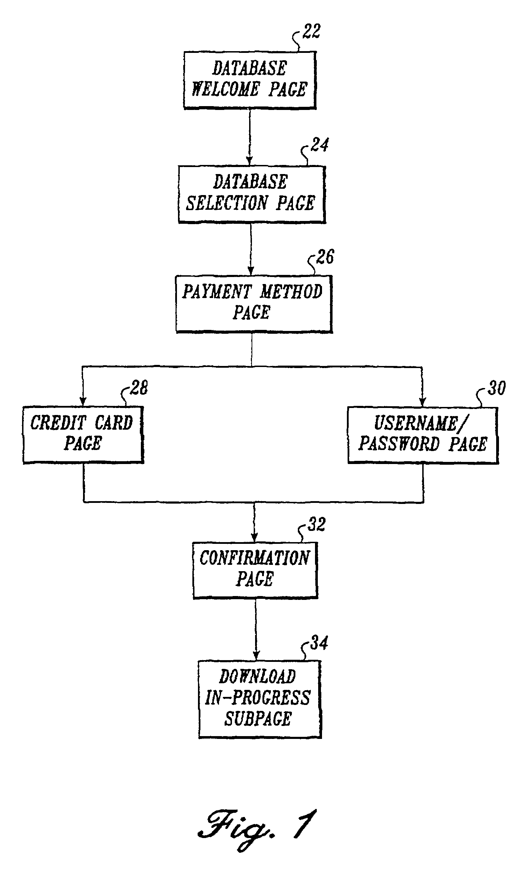

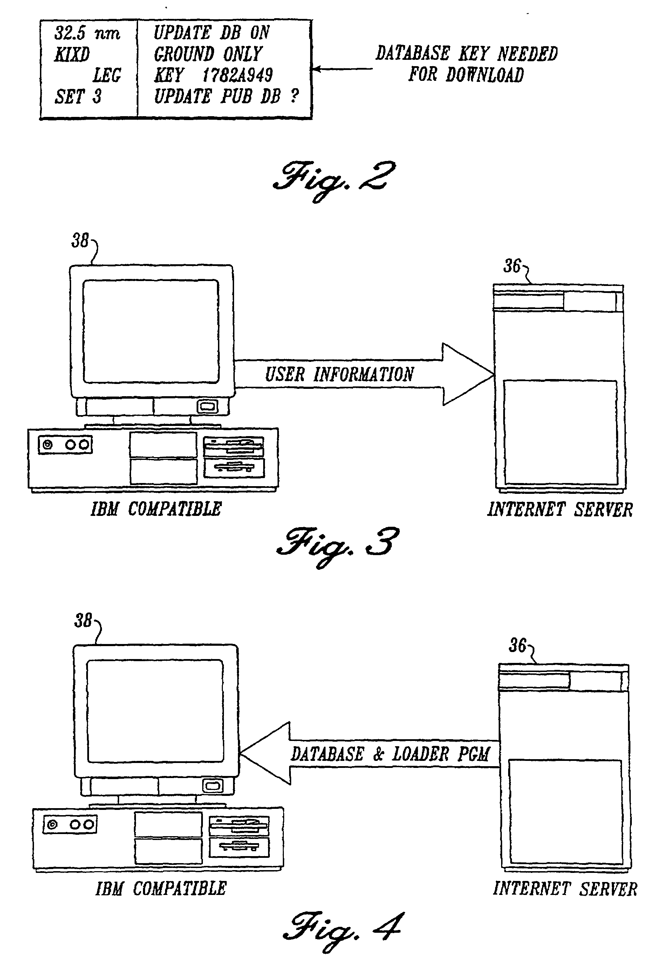

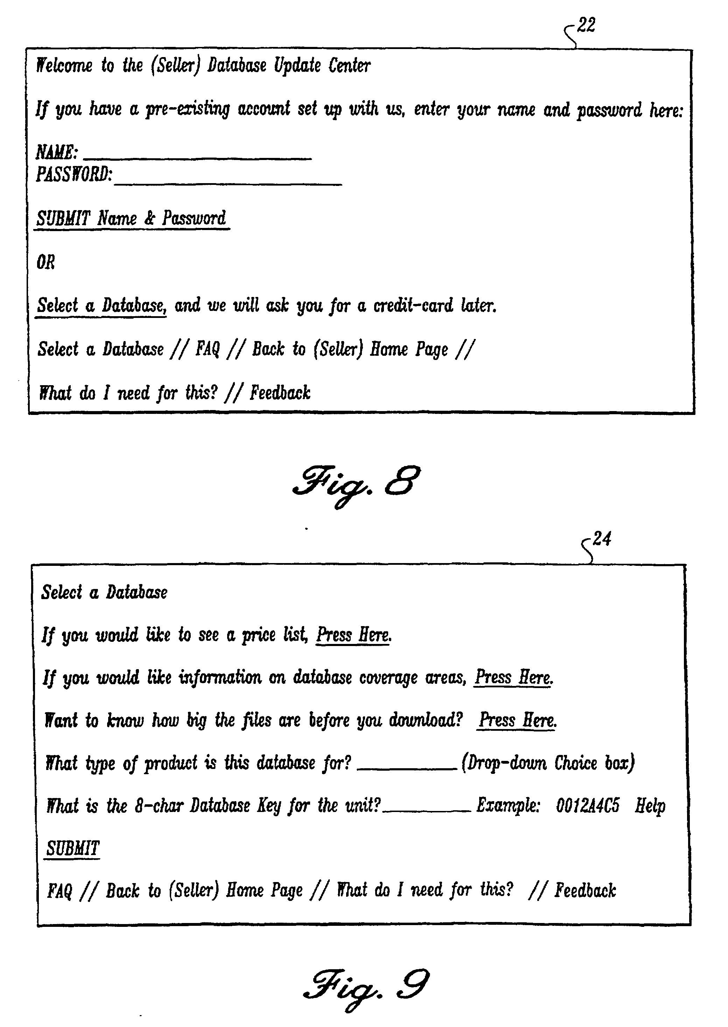

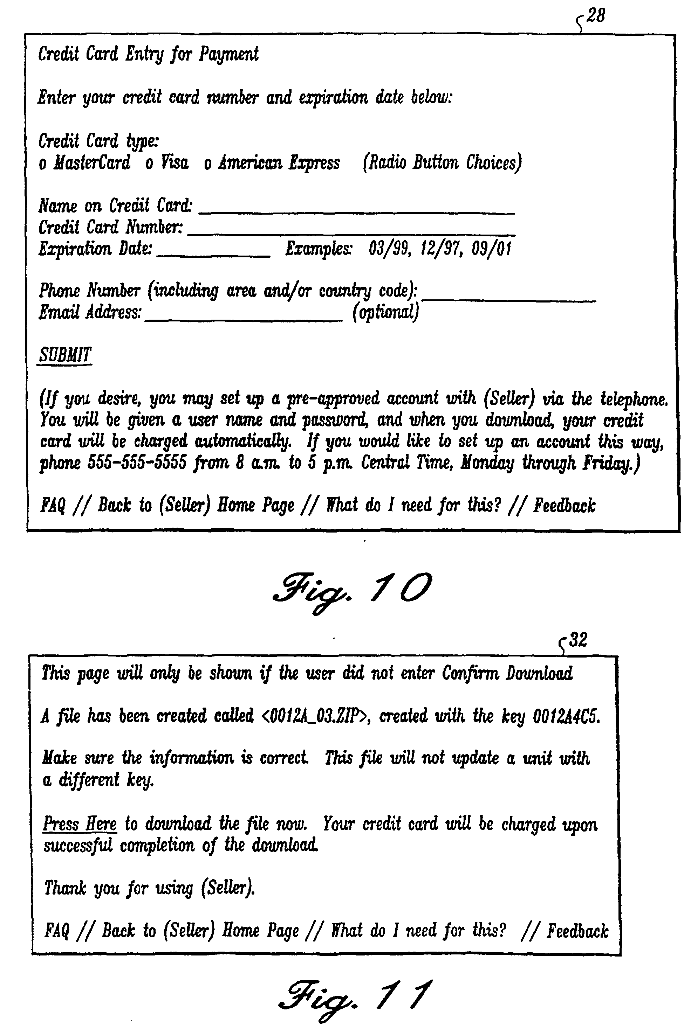

Referring to FIG. 1, an exemplary Web page layout is illustrated. The exemplary Web page layout includes a home page 22. The home page 22 is provided with one or more hyperlinks to provide access to the succeeding Web pages. As shown, the home page 22, for example, as illustrated in FIG. 8, may be provided with a hyperlink to a database selection page 24 (FIG. 9). The database selection page 24 enables a user to select the specific database. As mentioned above, depending upon the type of integrated GPS unit, various update databases are available for transfer over the Internet. After the particular database is selected from the database selection page 24, a hyperlink may be provided to a method of payment Web page 26 with hyperlinks to a credit card Web page 28 (FIG. 10) and a user password Web page 30. It is to be understood that the payment option is merely optional. The credit card Web page 28 and the user password Web page 30 allow alternate payment methods for the user in systems which include electronic payment. The credit card Web page 28 requires the user's credit card information as well as the unique software key (FIG. 2). Alternatively, the system allows for the customer to contact the software supplier ahead of time and establish an account. In this situation the user merely enters a password for the account as well as the unique software key for the unit. The credit card Web page 28 and the password Web page 30 are provided with hyperlinks to a confirmation page 32 (FIG. 11). The confirmation page 32 is merely exemplary and is not required for practice of the invention. The confirmation page 32 confirms the user's selection for the particular database as well as the method of electronic payment. If the user enters a confirmation, a hyperlink may be provided on the confirmation page 32 to initiate downloading of the updated software, which is linked to a message page 34 which indicates downloading in progress.

FIGS. 3 through 7 illustrate the present invention. As shown, user information is transferred over the Internet to one or more Internet servers 36 by way of a personal computer which may be an IBM compatible personal computer or other personal computer suitable for connection to the Internet. The software is encrypted and then transferred from one or more Internet servers 36 back to the personal computer 38 along with a decryption and upload program. The upload program enables the encrypted database to be uploaded into a product with a matching software key, such as an integrated GPS unit 40.

The software layout for the system is illustrated in FIG. 6 and includes a user database 40, a master "nav" database 42 and an upload program 45, identified as NETLOAD.EXE. The user information for example, regarding account and password information, etc. is maintained in the user database 40, accessible by the server 36. The topographical information is stored in the master "nav" database file 42, also accessible by the server 36. Once the user provides the unique software key as well as the desired payment method, a copy of the topographical and/or navigation data from a master "nav" file 42 is encrypted as a function of the unique software key, provided by the user and stored in a "keyed DB file" 44. The keyed DB file 44 is then compressed into a zip file 46 and transferred to the user by way of the Internet along with the decryption or upload file 45, identified as NETLOAD.EXE. The decryption file 45 enables the zip file containing the encrypted database to be uploaded into a product 40 as long as the software key of the product matches the software key to which the database was encrypted. If the software key matches the unique key within the product, the database is decrypted and uploaded into the product.

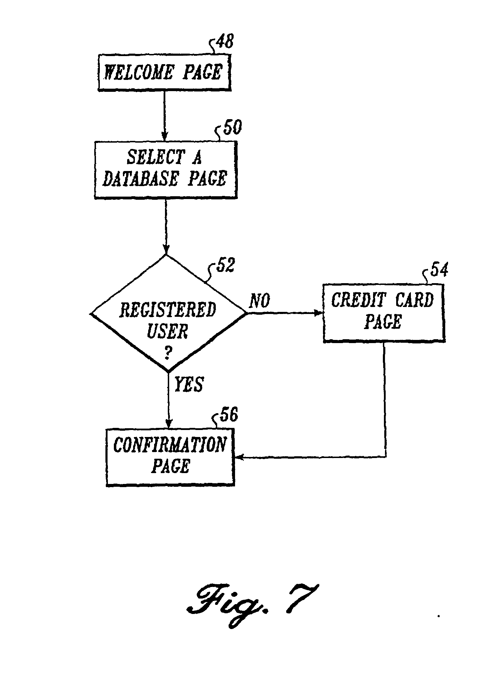

A simplified flowchart for the system in accordance with the present invention is illustrated in FIG. 7. Initially, the user connects to the database vendor's home page in step 48. Once connected to the database vendor's home page, the user selects a database from the available databases in step 50. Steps 52 and 54 provide for alternate payment methods. If a user wishes to avoid providing credit information over the Internet, the user can obtain a password and an account and become a registered user. Thus, the system checks whether the user is a registered user in step 52. If not, the system assumes the payment will be made by credit card in step 54. In both steps 52 and 54, the user also provides the unique software number that is used to encrypt the database as a function thereof. After the payment method and unique software key are entered, a confirmation page is generated in step 56, for downloading the software.

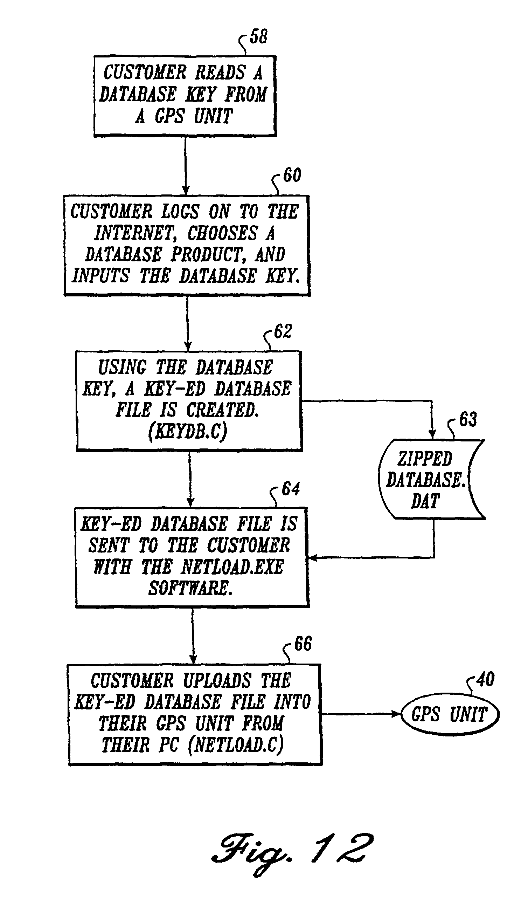

An overall flow chart is illustrated in FIG. 12. Initially, the unique software key, for example, the 8 digit unique software key unique to the GPS system, is read from the GPS unit 40 by the user and entered on the appropriate Web pages as discussed above. The software key may be printed somewhere on the GPS unit 40 to enable the user simply visually read the software key from the unit in step 58. In step 60, the user logs onto the Internet, chooses a database product and provides the unique software key for the GPS unit 40. The system encrypts the selected database as a function of the unique software key and stored into a keyed database file 44 (FIG. 6) in step 62. In order to conserve storage space, the keyed database file 44 may also be compressed in step 63 and transferred to the customer personal computer 38 in step 64 along with a decryption program 44, identified as NETLOAD.EXE. The keyed database file is then uploaded by the user to their GPS unit 40 (FIG. 5) with a matching software key in step 66.

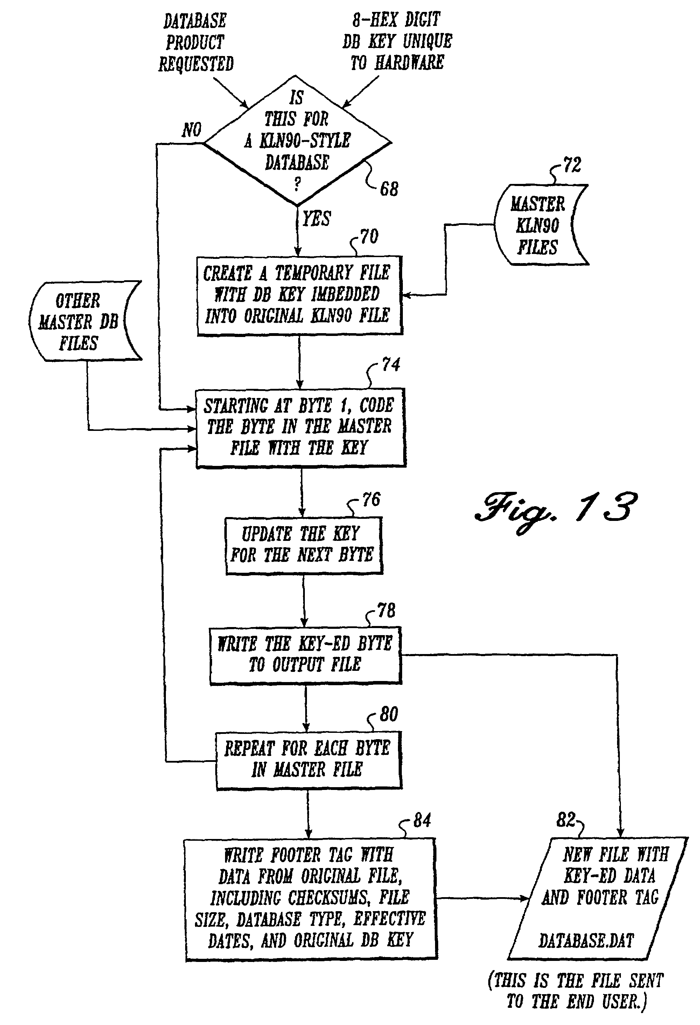

The flowchart for the database encryption or keying is illustrated in FIG. 13. After the user logs onto the Internet, selects a database and provides the unique software key, the system checks in step 68 whether the desired database is a type KLN 90 database. As used herein the KLN 90 type databases relates to the type of processor within the GPS unit 40. In particular, KLN 90 type databases are formatted for use with Intel type processor chips, while the balance of the databases are formatted for use with Motorola type processor chips. Due to the different byte storage methods between the two processor styles, the system checks in step 68 whether request is for a type KLN 90 database. If so, a temporary file is created in step 70 with the database key embedded into the original KLN 90 file from a master KLN 90 database file 72, a subset of the master "nav" DB files 42. If the request is for other than KLN 90 type database, the system proceeds directly to step 74. In step 74, starting with the first byte, the byte is encrypted as a function of the database key, for example by cyclic redundancy coding (CRC), as discussed below. After the first byte is coded with the database key, the key is updated for the next byte in step 76. The keyed or encrypted byte is written to an output file 82 for later transmission over the Internet to the user's personal computer 38 in step 78. This process is continued until all of the bytes in the database file have been keyed and written to the output file 82 as illustrated by step 80. After all of the bytes have been written to the output file 82, a footer tag with data from the original file, including checksums, file size, database type, the effective dates and the original database key are written to the output file 82 and sent to the user along with the upload file NETLOAD.EXE in step 82 as discussed above. If the software key in the GPS unit 40 matches the database key, the NETLOAD.EXE file decrypts and uploads the updated database into an integrated GPS unit 40.

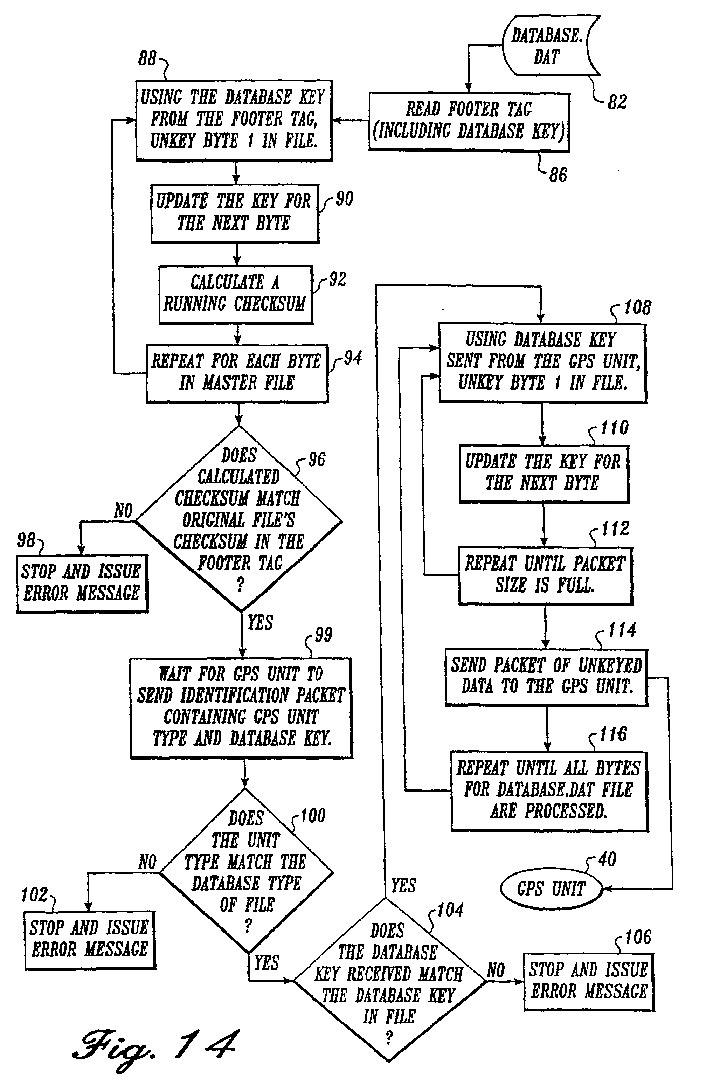

FIG. 14 is a flowchart for the decryption program 4 5 (NETLOAD.EXE) for uploading the encrypted database software to the GPS unit 40. As mentioned above, the encrypted database file 82 is provided with the encrypted data as well as a footer tag which includes the original software key, checksums, the file size, the database type as well as the effective dates for the database. In step 86, the footer tag is read including the software key from the encrypted output file 82. As discussed in more detail below, the software key from the footer tag is used to decrypt the first byte of the database in step 88. After the first byte is decrypted, the key is updated for the next byte in step 90. After the new key is updated, a checksum is calculated to determine if there are any errors in the data in step 92. The process of steps 88-92 is repeated for each byte in the encrypted database file 82, as indicated by step 94. After all of the bytes in the output file 82 have been decrypted, the system checks in step 96 to determine whether the checksum for the decrypted file matches the original checksum included in the footer tag in the output file 82 in step 96. If there are any discrepancies in the checksum an error message is displayed in step 98. If the checksums match, the system communicates with the GPS unit 40 in step 99 and awaits for the GPS unit 40 to send an identification packet containing the GPS unit type as well as the software key. Once the software key and GPS unit type are received from the GPS unit 40, the system determines in step 100 whether the GPS unit type matches the database file requested. If not, an error message is displayed in step 102. Otherwise, the system proceeds to step 104 and ascertains whether the software key received from the GPS unit 40 matches the software key used to encrypt the database file and contained in the footer tag mentioned above. If not, an error message is displayed in step 106. Otherwise, the system proceeds to step 108 where the software key received from the GPS unit is used to decrypt the first byte in the output file 82. After the first byte is decrypted or unkeyed, the key is updated in step 110 for the next byte. The steps 108 and 110 are repeated until a sufficient number of bytes have been unkeyed for a full packet as indicated in step 112. Each time a packet is full, a packet of decrypted data is sent to the GPS unit 40 in step 114. As indicated in step 116, the process is repeated until all of the bytes in the encrypted database file have been processed.

Essentially the encryption process is based on cyclic redundancy code (CRC) table of 256 pseudo random numbers from 0 to 255, for example, as illustrated in TABLE 1.

**TABLE 1**

| CRC TABLE ENTRY | VALUE |
|---|---|
| 0 | 0 |
| 1 | 1996959894 |
| 2 | 3993919788 |
| 3 | 2567524794 |
| ... | |
| 114 | 3188396048 |
| ... | |
| ... | |
| 141 | 2466906013 |
| ... | |
| ... | |
| 237 | 3736837829 |
| ... | |
| 255 | |

Initially, a seed CRC value is chosen, for example 13579246. The first byte in the database or source file is read and added to the seed value. For example, if the first byte in the database equates to the number 3, the new byte will be the CRC seed value (13579246) plus the byte read from the file Boolean ANDed with the hexadecimal number FF or 255. For example, adding the value of the source byte 3 to the seed value of 13579246 would equal the number 13579249. Taking the number 13579249 and Boolean ANDing it with the hexadecimal number 255 yields the number 241. Therefore, the new byte written to the file as shown in TABLE 2 below will be 241.

**TABLE 2**

| ORIGINAL DATA FILE | NEW DATA FILE | CRC KEY (START = 13579246) |
|---|---|---|
| 3 | 241 | |
| 132 | | |
| 204 | | |

After the first byte is keyed or encrypted, the CRC value for the next byte needs to be updated by taking the current CRC value and doing a Boolean EXCLUSIVE OR with the original byte. That value, in turn is Boolean ANDed with the hexadecimal number 255 which provides an index into the CRC table (between 0 and 255). The CRC table value that is looked up with that index is then Boolean EXCLUSIVE ORed with the CRC value shifted to the right 8 places, for example as shown below.
134579246 ^ 3 = 13579245
13579245 & 255 = 237
CRC_TABLE[237] = 3736837829
13579246 >> 8 = 53043
3736837829 ^ 53043 = 3736818166, which is now the new CRC value as illustrated in TABLE 3:

**TABLE 3**

| ORIGINAL DATA FILE | NEW DATA FILE | CRC KEY (START = 13579246) |
|---|---|---|
| 1 | 3 | 3736818166 |
| 132 | | |
| 204 | | |

The process is repeated for each byte in the file, for example as shown in TABLE 4 below.

**TABLE 4**

| BYTE NUMBER | ORIGINAL DATA FILE | NEW DATA FILE | CRC KEY (START = 13579246) |
|---|---|---|---|
| 1 | 3 | 241 | 3736818166 |
| 2 | 132 | 122 | 3201674049 |
| 3 | 204 | 13 | 2478254646 |

The process is repeated for each byte in the file.

In order to decode or decrypt the data bytes, the process is simply reversed starting with the same known seed CRC key and the same base CRC table values, for example as illustrated in TABLE 5 below.

**TABLE 5**

| BYTE NUMBER | KEY DATA FILE | NEW DATA FILE | CRC KEY (START = 13579246) |
|---|---|---|---|
| 1 | 241 | | |
| 2 | 122 | | |
| 3 | 13 | | |

Initially, the first byte from the keyed file is read, for example 241. The current value of the CRC key (13579246) is subtracted from that value. The result (-13579005) is Boolean ANDed with 255 which provides a result of 3 which was the original starting point for example as shown in TABLE 6 below.

**TABLE 6**

| BYTE NUMBER | KEY DATA FILE | NEW DATA FILE | CRC KEY (START = 1359246) |
|---|---|---|---|
| 1 | 241 | 3 | |
| 2 | 122 | | |
| 3 | 13 | | |

The CRC key is then updated for the next byte. In order to update the CRC key essentially the same method is used as before. The new byte 3 is EXCLUSIVE ORed with the current value of the CRC key (13579246). The result (13579245) is then Boolean ANDed with the hexadecimal number 255 with a result of 237 which is used as an index to look the CRC value in the CRC lookup table. The current example of the index corresponds to a table value of 3736837829. The current CRC key (13579246) is then shifted to the right 8 places. The result 53043 is EXCLUSIVE ORed with the value that was looked up in the CRC table (3736837829) by way of the index 237. The result 3736818166 is the CRC for the new byte, for example as shown in TABLE 7 below.

**TABLE 7**

| BYTE NUMBER | KEY DATA FILE | NEW DATA FILE | CRC KEY (START = 13579246) |
|---|---|---|---|
| 1 | 241 | 3 | 3736818166 |
| 2 | 122 | | |
| 3 | 13 | | |

For the next byte the current CRC key 3736818166 is subtracted from the next byte read 122, the result being 558149252. This result 558149252 is anded with the hexadecimal number 255 to produce the next byte 132 which, is the original byte number in the original data file. The process is repeated for each byte as shown below in TABLE 8.

**TABLE 8**

| BYTE NUMBER | KEY DATA FILE | NEW DATA FILE | CRC KEY (START = 13579246) |
|---|---|---|---|
| 1 | 241 | 3 | 3736818166 |
| 2 | 122 | 132 | 3201674049 |
| 3 | 13 | 204 | 2478254646 |

The process is repeated until the end of the file and the end result is that the output file exactly corresponds to the original file which was encrypted.

Obviously, many modifications and variations of the present invention are possible in light of the above teachings. Thus, it is to be understood that, within the scope of the appended claims, the invention may be practiced otherwise than as specifically described above.

## Claims

1. A method for allowing secure transmission of software code transmitted over a communication link from a transmitting electronic unit (36) to one or more receiving electronic units (38), the method comprising:
applying a unique software key to each of the one or more receiving electronic units;
encrypting (62) software code as a function of a single one of the unique software keys applied to the receiving electronic units;
transmitting (64) the encrypted software code from said transmitting electronic unit over said communication link to said one or more receiving electronic units (38), and
decrypting said transmitted, encrypted software code at that one of the receiving electronic units (38) with the applied unique software key that matches said single one of the software keys used to encrypt the software code

2. The method as recited in Claim 1, wherein the step of transmitting the encrypted software code further comprises transmitting an upload program NETLOAD.EXE with the encrypted software code and wherein decrypting said transmitted, encrypted software code further comprises decrypting said transmitted, encrypted software code according to said transmitted upload program (NETLOAD.EXE).

3. The method as recited in Claim 1 or 2 wherein at least one of said electronic units (38) is a global positioning system (GPS) unit (40).

4. The method as recited in Claim 1, 2 or 3 wherein encrypting (62) includes cyclic redundancy coding (CRS).

5. The method as recited in Claim 4, wherein said software key is initially used as a seed for encrypting said software.

6. The method as recited in any preceding Claim wherein said communication link is a wired link.

7. The method as recited in any preceding Claim, wherein said encrypted software code includes a footer tag that includes the single software key.

8. The method as recited in Claim 7, wherein said upload program decrypts said encrypted software code.

9. The method as recited in Claim 8, wherein said upload program reads the single software key from the footer tag and compares the software key in the footer tag with the software key applied to the receiving electronic unit (38).

10. A system for preventing unauthorized use of software transmitted over a communication link, the system comprising:
one or more receiving electronic units (38) to each of which is applied a unique software key;
means for encrypting (62)software as a function of a single one of the unique software keys applied to the receiving electronic units (38);
means for transmitting said encrypted software over a communication link to said one or more receiving electronic units (38); and
means for decrypting said transmitted encrypted software at the electronic unit with the applied unique software key that matches the single one of the unique software keys which is used by the encrypting means (62).

## Patentansprüche

1. Verfahren zur Ermöglichung der sicheren Übertragung von Softwarecode, der über eine Kommunikationsstrecke von einer elektronischen Sendereinheit (36) zu einer oder mehreren elektronischen Empfängereinheiten (38) übertragen wird, mit den folgenden Schritten:
Anwenden eines eindeutigen Softwareschlüssels auf die oder jede der mehreren elektronischen Empfängereinheiten;
Verschlüsseln (62). von Softwarecode als Funktion eines einzelnen der eindeutigen Softwareschlüssel, die auf die elektronischen Empfängereinheiten angewandt werden;
Übertragen (64) des verschlüsselten Softwarecodes von der elektronischen Sendereinheit über die Kommunikationsstrecke zu der einen oder den mehreren elektronischen Empfängereinheiten (38) und
Entschlüsseln des verschlüsselten übertragenen Softwarecodes in der der elektronischen Empfängereinheiten (38) mit dem angewandten Softwareschlüssel, der mit dem einzelnen der Softwareschlüssel übereinstimmt, mit dem der Softwarecode verschlüsselt wurde.

2. Verfahren nach Anspruch 1, wobei der Schritt des Übertragens des verschlüsselten Softwarecodes weiterhin das Übertragen eines Heraufladeprogramms NETLOAD.EXE mit dem verschlüsselten Softwarecode umfaßt und wobei das Entschlüsseln des übertragenen verschlüsselten Softwarecodes weiterhin das Entschlüsseln des übertragenen verschlüsselten Softwarecodes gemäß dem übertragenen Heraufladeprogramm (NETLOAD.EXE) umfaßt.

3. Verfahren nach Anspruch 1 oder 2, wobei mindestens eine der elektronischen Einheiten (38) eine GPS-Einheit (Global Positioning System) (40) ist.

4. Verfahren nach Anspruch 1, 2 oder 3, wobei das Verschlüsseln (62) eine CRS-Codierung (Cyclic Redundancy Coding) umfaßt.

5. Verfahren nach Anspruch 4, wobei der Softwareschlüssel anfänglich als ein Anfangswert für die Verschlüsselung der Software verwendet wird.

6. Verfahren nach einem der vorhergehenden Ansprüche, wobei die Kommunikationsstrecke eine drahtgeführte Strecke ist.

7. Verfahren nach einem der vorhergehenden Ansprüche, wobei der verschlüsselte Softwarecode eine Fußmarkierung enthält, die den einzelnen Softwareschlüssel enthält.

8. Verfahren nach Anspruch 7, wobei das Heraufladeprogramm den verschlüsselten Softwarecode entschlüsselt.

9. Verfahren nach Anspruch 8, wobei das Heraufladeprogramm den einzelnen Softwareschlüssel aus der Fußmarkierung liest und den Softwareschlüssel in der Fußmarkierung mit dem auf die elektronische Empfängereinheit (38) angewandten Softwareschlüssel vergleicht.

10. System zur Verhinderung der unbefugten Benutzung von Software, die über eine Kommunikationsstrecke übertragen wird, umfassend:
eine oder mehrere elektronische Empfängereinheiten (38), auf die jeweils ein eindeutiger Softwareschlüssel angewandt wird;
ein Mittel zum Verschlüsseln (62) von Software als Funktion eines einzelnen der eindeutigen Softwareschlüssel, die auf die elektronischen Empfängereinheiten (38) angewandt werden;
ein Mittel zum Übertragen der verschlüsselten Software über eine Kommunikationsstrecke zu der einen oder den mehreren elektronischen Empfängereinheiten (38); und
ein Mittel zum Entschlüsseln der übertragenen verschlüsselten Software in der elektronischen Einheit mit dem angewandten eindeutigen Softwareschlüssel, der mit dem einzelnen der eindeutigen Softwareschlüssel übereinstimmt, der von dem Verschlüsselungsmittel (62) verwendet wird.

## Revendications

1. Procédé pour permettre la transmission sécurisée d'un code logiciel transmis sur une liaison de communication depuis une unité électronique émettrice (36) vers une ou plusieurs unités électroniques réceptrices (38), le procédé comprenant :
l'application d'une clé logicielle unique à chacune des une ou plusieurs unités électroniques réceptrices ;
le cryptage (62) du code logiciel en fonction d'une clé unique des clés logicielles uniques appliquées aux unités électroniques réceptrices ;
la transmission (64) du code logiciel crypté depuis ladite unité électronique émettrice sur ladite liaison de communication auxdites une ou plusieurs unités électroniques réceptrices (38), et
le décryptage dudit code logiciel transmis, crypté au niveau de cette unité des unités électroniques réceptrices (38) avec la clé logicielle unique appliquée qui correspond à ladite clé unique des clés logicielles utilisées pour crypter le code logiciel.

2. Procédé selon la revendication 1, dans lequel l'étape de transmission du code logiciel crypté comprend en outre la transmission d'un programme de téléchargement NETLOAD.EXE avec le code logiciel crypté et dans lequel le décryptage dudit code logiciel crypté transmis comprend en outre le décryptage dudit code logiciel crypté transmis conformément audit programme de téléchargement transmis (NETLOAD.EXE).

3. Procédé selon la revendication 1 ou 2, dans lequel au moins une desdites unités électroniques (38) est une unité (40) de système de positionnement global (GPS).

4. Procédé selon la revendication 1, 2 ou 3, dans lequel le cryptage (62) comporte un codage à redondance cyclique (CRS).

5. Procédé selon la revendication 4, dans lequel ladite clé logicielle est initialement utilisée comme valeur de départ pour crypter ledit logiciel.

6. Procédé selon l'une quelconque des revendications précédentes, dans lequel ladite liaison de communication est une liaison filaire.

7. Procédé selon l'une quelconque des revendications précédentes, dans lequel ledit code logiciel crypté comporte une étiquette de queue qui inclut la clé logicielle unique.

8. Procédé selon la revendication 7, dans lequel ledit programme de téléchargement décrypte ledit code logiciel crypté.

9. Procédé selon la revendication 8, dans lequel ledit programme de téléchargement lit la clé logicielle unique à partir de l'étiquette de queue et compare la clé logicielle dans l'étiquette de queue à la clé logicielle appliquée à l'unité électronique réceptrice (38).

10. Système pour empêcher l'utilisation illégale d'un logiciel transmis sur une liaison de communication, le système comprenant :
une ou plusieurs unités électroniques réceptrices (38) à chacune desquelles est appliquée une clé logicielle unique ;
un moyen pour crypter (62) le logiciel en fonction d'une clé unique des clés logicielles uniques appliquées aux unités électroniques réceptrices (38) ;
un moyen pour transmettre ledit logiciel crypté sur une liaison de communication auxdites une ou plusieurs unités électroniques réceptrices (38) ; et
un moyen pour décrypter ledit logiciel crypté transmis au niveau de l'unité électronique avec la clé logicielle unique appliquée qui correspond à la clé unique des clés logicielles uniques qui est utilisée par le moyen de cryptage (62).
